# EUROPÄISCHE PATENTSCHRIFT

(11) **EP 3 959 514 B1**
(45) Veröffentlichungstag und Bekanntmachung des Hinweises auf die Patenterteilung: **22.03.2023**
(21) Anmeldenummer: 20720411.6
(22) Anmeldetag: 17.04.2020
(51) Int. Cl.: G01N 27/22

(54) **SENSORVORRICHTUNG ZUR MESSUNG VON TRANSPIRATION EINER PFLANZENPROBE**
SENSING APPARATUS FOR MEASURING TRANSPIRATION IN A PLANT PROBE
APPAREIL DE MESURE DE LA TRANSPIRATION D'UN ECHANTILLON DE PLANTE

(30) Priorität: 25.04.2019 DE 102019205896
(43) Veröffentlichungstag der Anmeldung: 02.03.2022
(73) Patentinhaber: Robert Bosch GmbH, 70442 Stuttgart (DE)
(72) Erfinder: OHL, Christian, 72793 Pfullingen (DE); BOECKER, Matthias, 72760 Reutlingen (DE); CLASS, Juergen, 71364 Winnenden (DE)
(86) Internationale Anmeldenummer: PCT/EP2020/060807
(87) Internationale Veröffentlichungsnummer: WO 2020/216682

(56) Entgegenhaltungen:
- WO-A1-2016/189053
- US-A- 4 160 374
- US-A1- 2005 188 764
- US-A1- 2007 273 394
- US-A1- 2019 101 516
- PIPITSUNTHONSAN PRONTHEP ET AL: "Leaf Sensor for Stomata Transpiration Monitoring Using Temperature and Humidity", 2018 21ST INTERNATIONAL SYMPOSIUM ON WIRELESS PERSONAL MULTIMEDIA COMMUNICATIONS (WPMC), IEEE, 25. November 2018 (2018-11-25), Seiten 252-255, XP033549146, DOI: 10.1109/WPMC.2018.8713096 [gefunden am 2019-05-10]

## Beschreibung

### Stand der Technik

Vor dem Hintergrund hohen Wasserverbrauchs in der Landwirtschaft für Bewässerungsmaßnahmen wird nach Lösungen zum Einsparen von Wasser gesucht. Eine Möglichkeit Wasser zu sparen besteht darin, Pflanzen ausschließlich bedarfsgerecht zu bewässern. Hierzu ist es wichtig, den Wasserbedarf bzw. den Bewässerungszustand einer Pflanze zu kennen.

Eine Möglichkeit, den Bewässerungszustand einer Pflanze zu bestimmen liegt in der Messung der Transpiration der Pflanze, beispielsweise an einem Blatt. Durch Transpiration und Guttation werden in etwa 97-99,5 % des von den Wurzeln einer Pflanze aufgenommenen Wassers von der Pflanze wieder abgegeben. Die Transpiration wird dabei durch kleine Poren kontrolliert, die sich typischerweise auf den Unterseiten der Blätter befinden und als Stomata bezeichnet werden. Die Transpiration bzw. ein zeitlicher Verlauf der Transpiration (Transpirationsrate) der Pflanze ist somit abhängig vom dem Wasserhaushalt der Pflanze und kann damit als Maß für den Bewässerungszustand dienen.

Eine Sensorvorrichtung zur Messung der Transpiration wird beispielsweise in der DE 30 32 833 C beschrieben.

### Offenbarung der Erfindung

Die vorliegende Erfindung betrifft eine Sensorvorrichtung mit den Merkmalen des Anspruchs 1.

Gemäß einem Aspekt der Erfindung ist eine Sensorvorrichtung zur Messung von Transpiration einer Pflanzenprobe vorgesehen. Die Sensorvorrichtung umfasst eine Leiterplatteneinrichtung, einen an der Leiterplatteneinrichtung angeordneten und kontaktierten ersten Feuchtigkeitssensor zum Erfassen einer ersten Luftfeuchte im Bereich der Pflanzenprobe und einen an der Leiterplatteneinrichtung angeordneten und kontaktierten zweiten Feuchtigkeitssensor zum Erfassen einer Umgebungsluftfeuchte. Weiterhin weist die Sensorvorrichtung eine erste Kammerbegrenzungsstruktur zur Anlage an die Pflanzenprobe auf, wobei die erste Kammerbegrenzungsstruktur gegenüber der Leiterplatteneinrichtung vorspringt und den ersten Feuchtigkeitssensor derart umrahmt, dass, wenn die Kammerbegrenzungsstruktur an der Pflanzenprobe anliegt, der erste Feuchtigkeitssensor in einer von der Pflanzenprobe und der ersten Kammerbegrenzungsstruktur begrenzten, umschlossenen beziehungsweise wenigstens teilweise geschlossenen ersten Luftkammer angeordnet ist. Die Leiterplatteneinrichtung oder die erste Kammerbegrenzungsstruktur weist eine erste Lüftungsöffnung auf, welche die erste Luftkammer in fluidisch leitender Weise mit der Umgebung verbindet, um eine Diffusion von durch die Pflanzenprobe durch Transpiration abgegebenem Wasser in die Umgebung zu ermöglichen und eine Sättigung der sich in der ersten Luftkammer befindlichen Luft mit Wasser zu vermeiden. Die Sensorvorrichtung weist ferner eine zweite Kammerbegrenzungsstruktur auf, welche gemeinsam mit der Leiterplatteneinrichtung eine umschlossene beziehungsweise wenigstens teilweise geschlossene zweite Luftkammer ausbildet, in welcher der zweite Feuchtigkeitssensor aufgenommen ist, wobei die Leiterplatteneinrichtung oder die zweite Kammerbegrenzungsstruktur eine zweite Lüftungsöffnung aufweist, welche die zweite Luftkammer in fluidisch leitender Weise mit der Umgebung verbindet, so dass der in der zweiten Luftkammer eine Luftfeuchte der Umgebung als Referenzluftfeuchtigkeit erfassen kann. Weiterhin weist die Sensorvorrichtung eine Befestigungseinrichtung zur Befestigung der Pflanzenprobe an der ersten Kammerbegrenzungsstruktur auf.

Eine der Erfindung zugrundeliegende Idee besteht darin, zwei Feuchtigkeitssensoren zum Erfassen der Luftfeuchtigkeit an einer Trägerplatte in voneinander isolierten, getrennten Kammern vorzusehen, wobei ein erster Feuchtigkeitssensor in einer offenen Kavität angeordnet ist, die durch die Pflanzenprobe zur Bildung einer ersten Kammer umschlossen beziehungsweise geschlossen wird, und dadurch die sich in Folge der Transpiration der Pflanzenprobe ändernde Luftfeuchtigkeit in der ersten Kammer erfasst. Um eine Diffusion von durch die Pflanzenprobe abgegebenem Wasser in die Umgebung zu ermöglichen und eine Sättigung der sich in der ersten Luftkammer befindlichen Luft mit Wasser zu vermeiden, ist die erste Kammer über eine Öffnung mit der Umgebung verbunden. Ein zweiter Feuchtigkeitssensor ist in einer zweiten Kammer angeordnet, welche über eine Lüftungsöffnung mit der Umgebung verbunden ist, und erfasst als Referenzwert die Luftfeuchtigkeit der Umgebungsluft. Die Kammern werden jeweils durch Kammerbegrenzungsstrukturen definiert. Die die erste Kammer definierende Begrenzungsstruktur ist als Rahmen, beispielsweise in Form eines Rings, realisiert, welcher den ersten Feuchtigkeitssensor umfänglich umschließt und eine Anlageöffnung definiert, die durch die Pflanzenprobe abdeckbar ist. Damit kann die Kammerbegrenzungsstruktur beispielweise an eine Blattunterseite, wo sich typischerweise die Stomata befinden, angelegt werden.

Einer der Vorteile der Sensorvorrichtung liegt darin, dass sich durch die Anbringung beider Feuchtigkeitssensoren an einer Leiterplatteneinrichtung in fluidisch getrennten Kammern ein kompakter Aufbau der Sensorvorrichtung ergibt. Da die erste Luftkammer, in der der erste Feuchtigkeitssensor angeordnet ist, durch die Pflanzenprobe und die an diese angelegte Begrenzungsstruktur gebildet wird und die Umgebungsfeuchte in der von der ersten Luftkammer getrennten zweite Luftkammer durch den zweiten Feuchtigkeitssensor erfasst wird, sind jeweils voneinander unbeeinflusste Messwerte ermittelbar. Dadurch kann eine aus den gemessenen Luftfeuchten ermittelte Differenz mit verbesserter Zuverlässigkeit als Maß für die Transpiration der Pflanzprobe verwendet werden.

Ein weiterer Vorteil liegt darin, dass durch die Anordnung der Feuchtigkeitssensoren in durch die Kammerbegrenzungsstrukturen definierten Kammern, das Risiko einer Beschädigung der Sensoren verringert wird, was die Eignung der Sensorvorrichtung für den Dauereinsatz verbessert. Zudem ist die Sensorvorrichtung einfach aufgebaut und kann mit wenigen Komponenten realisiert werden, wodurch diese robust und kostengünstig ist.

Gemäß einer Ausführungsform der Sensorvorrichtung ist vorgesehen, dass der erste Feuchtigkeitssensor an einer ersten Oberfläche der Leiterplatteneinrichtung angeordnet ist und der zweite Feuchtigkeitssensor an einer entgegengesetzt zu der ersten Oberfläche orientierten zweiten Oberfläche der Leiterplatteneinrichtung angeordnet ist, wobei die Leiterplatteneinrichtung an einem Sensorgehäuse befestigt und mit der zweiten Oberfläche dem Sensorgehäuse zugewandt orientiert ist, und wobei die zweite Kammerbegrenzungsstruktur durch eine Vertiefung des Sensorgehäuses gebildet ist. Durch die Anordnung der Feuchtigkeitssensoren an entgegensetzten Oberflächen der Leiterplatteneinrichtung wird ein noch kompakterer und damit leichterer Aufbau der Sensorvorrichtung realisiert. Das Sensorgehäuse weist einen platten- oder blockförmigen Basisabschnitt auf, an dessen Oberfläche eine die zweite Luftkammer bildende Ausnehmung vorgesehen ist. Die Leiterplattenvorrichtung wird derart an dem Basisabschnitt angeordnet, dass der zweite Feuchtigkeitssensor in der Ausnehmung des Basisabschnitts des Sensorgehäuses positioniert ist. Damit wird der mechanische Schutz insbesondere des zweiten Feuchtigkeitssensors und allgemein der Leiterplatteneinrichtung verbessert. Das kann beispielsweise aus einem Kunststoffmaterial gebildet sein.

Gemäß einer weiteren Ausführungsform ist vorgesehen, dass die zweite Lüftungsöffnung durch eine in die Vertiefung des Sensorgehäuses mündende Durchgangsöffnung des Sensorgehäuses ausgebildet ist. Damit wird eine einfache Möglichkeit zum Luftaustausch zwischen der zweiten Luftkammer und der Umgebung geschaffen.

Gemäß einer weiteren Ausführungsform ist vorgesehen, dass die erste Lüftungsöffnung durch eine sich zwischen der ersten und der zweiten Oberfläche der Leiterplatteneinrichtung erstreckende Plattendurchgangsöffnung ausgebildet ist, und wobei das Sensorgehäuse eine fluidisch leitend mit der Plattendurchgangsöffnung verbundene Gehäuseöffnung aufweist, welche mit der Umgebung verbunden ist. Somit wird ein durchgehender Lüftungskanal zwischen der ersten Luftkammer und der Umgebung realisiert

Gemäß einer weiteren Ausführungsform ist vorgesehen, dass die erste Kammerbegrenzungsstruktur zumindest teilweise durch einen Vorsprung des Sensorgehäuses ausgebildet ist. Beispielsweise kann vorgesehen sein, dass das Sensorgehäuse einen Rahmenabschnitt aufweist, der von dem Basisabschnitt vorspringt und die auf dem Basisabschnitt angeordnete Leiterplatteneinrichtung umgibt und über diese vorsteht. Ein entgegengesetzt zu dem Basisabschnitt gelegener Bereich des Rahmenabschnitts ist dann zur Anlage an die Pflanzenprobe vorgesehen. Auf diese Weise wird eine besonders leichte und robuste Sensorvorrichtung bereitgestellt.

Gemäß einer weiteren Ausführungsform ist vorgesehen, dass die Befestigungseinrichtung ein an die Leiterplatteneinrichtung gekoppeltes erstes Klemmstück und ein gegenüber dem ersten Klemmstück vorgespanntes, dem ersten Kammerbegrenzungsabschnitt gegenüberliegend angeordnetes zweites Klemmstück aufweist. Zur Vorspannung kann beispielsweise eine Feder verwendet werden. Optional ist das erste Klemmstück einstückig mit bzw. durch das Sensorgehäuse ausgebildet. Hierbei kann beispielsweise ein an den Basisabschnitt angeformter Kopplungsabschnitt vorgesehen sein, mit welchem das zweite Klemmstück schwenkbar verbunden ist. Durch die Realisierung der Befestigungseinrichtung mit Klemmstücken wird eine einfach handhabbare Möglichkeit zur Befestigung bzw. Einspannung der Pflanzenprobe zwischen der ersten Kammerbegrenzungsstruktur und dem zweiten Klemmstück bereitgestellt. Optional ist das zweite Klemmstück aus einem für Licht transparenten Material gebildet, so dass eine Verschattung der Pflanzenprobe durch das Klemmstück vorteilhaft verringert wird.

Gemäß einer weiteren Ausführungsform ist vorgesehen, dass die erste Kammerbegrenzungsstruktur zumindest teilweise durch ein magnetisches oder magnetisierbares Material gebildet ist, und wobei die Befestigungseinrichtung ein erstes Magnetstück zur magnetischen Kopplung mit dem magnetischen oder magnetisierbaren Material der ersten Kammerbegrenzungstruktur aufweist. Demnach kann die Pflanzenprobe zwischen die Kammerbegrenzungsstruktur und das erste Magnetstück eingeklemmt werden, da sich das Magnetstück und die Kammerbegrenzungsstruktur gegenseitig anziehen. Beispielsweise kann das erste Magnetstück ein Ringmagnet sein, dessen Gestalt korrespondierend zu der Gestalt der ersten Kammerbegrenzungsstruktur ausgebildet ist. Dadurch wird vorteilhaft die durch das Magnetstück verdeckte Oberfläche der Pflanzenprobe verringert, so dass die Pflanzenprobe weiter Photosynthese betreiben kann und nicht durch die Sensorvorrichtung geschädigt wird.

Gemäß einer weiteren Ausführungsform ist vorgesehen, dass die erste Kammerbegrenzungsstruktur durch ein an der Leiterplatteneinrichtung befestigtes zweites Magnestück ausgebildet ist. Demnach ist an der Leiterplatteneinrichtung ein Rahmen aus einem magnetischen oder magnetisierbaren Material befestigt, welcher die erste Kammerbegrenzungsstruktur bildet.

Gemäß einer weiteren Ausführungsform ist vorgesehen, dass die Befestigungseinrichtung durch ein mit der Leiterplatteneinrichtung verbundenes Befestigungsband, welches eine Klebstoffschicht zum Kleben an die Pflanzenprobe aufweist, gebildet ist. Hierbei wird nach Art eines Pflasters die Leiterplatteneinrichtung direkt an die Pflanzenprobe geklebt. Auf diese Weise wird ein besonders leichter Aufbau der Sensorvorrichtung realisiert und das Risiko einer Beschädigung der Pflanzenprobe durch die Sensorvorrichtung weiter verringert.

Gemäß einer weiteren Ausführungsform ist vorgesehen, dass die erste Kammerbegrenzungsstruktur einen Anlageabschnitt aus einem elastisch verformbaren Material, insbesondere einem Silikonmaterial, zur Anlage an die Pflanzenprobe aufweist. Beispielsweise kann an einer entgegengesetzt zu der Leiterplatteneinrichtung gelegenen Oberfläche des zweiten Magnetstücks eine Schicht aus elastisch verformbarem, gummiartigen Material vorgesehen sein. Der Anlageabschnitt kann auch an dem entgegengesetzt zu dem Basisabschnitt gelegenen Bereich des Rahmenabschnitts des Sensorgehäuses ausgebildet sein. Durch das elastisch verformbare, gummiartige Material des Anlageabschnitts wird das Risiko einer Beschädigung der Pflanzenprobe durch die Sensorvorrichtung weiter verringert.

Gemäß einer weiteren Ausführungsform weist die Sensorvorrichtung einen an der Leiterplatteneinrichtung außerhalb der ersten und zweiten Kammerbegrenzungsabschnitte angeordneten Strahlungssensor zum Erfassen einfallender Strahlung auf. Damit kann vorteilhaft erfasst werden, welchen Strahlungsbedingungen, z.B. durch Sonneneinstrahlung, die Pflanzenprobe ausgesetzt ist. Damit kann ein aus der Transpiration der Pflanzenprobe ableitbares Maß für den Bewässerungszustand der Pflanze noch präziser angegeben werden.

Gemäß einer weiteren Ausführungsform ist vorgesehen, dass die erste und die zweite Lüftungsöffnung jeweils durch eine gasdurchlässige Membran abgedeckt sind. Insbesondere kann eine gemeinsame Membran beide Lüftungsöffnungen abdecken, oder es kann vorgesehen sein, dass je Lüftungsöffnung jeweils eine eigene Membran vorgesehen ist. Beispielsweise können die an dem Sensorgehäuse vorgesehene Durchgangsöffnung, die in die zweite Luftkammer mündet, und die Gehäuseöffnung jeweils durch eine an dem Sensorgehäuse befestigte Membran abgedeckt sein, um das Eindringen von Schmutz oder Wasser aus der Umgebung in die jeweilige Luftkammer zu vermeiden. Dies verbessert weiter die Eignung der Sensorvorrichtung für den Dauereinsatz im Freien. Optional kann die Membran eine variierbare Permeabilität aufweisen, um eine Diffusionsrate bzw. eine Durchflussrate durch die erste Lüftungsöffnung bzw. aus der ersten Luftkammer heraus zu variieren. Dies kann beispielsweise über elektroaktive Polymere oder andere Materialien, die geeignet sind, die Porosität bzw. Permeabilität der Membran in Reaktion auf eine elektrische Spannung zu ändern.

Gemäß einer weiteren Ausführungsform kann der erste Feuchtigkeitssensor und/oder der zweite Feuchtigkeitssensor als kombinierte Sensoreinheit realisiert sein, die zur Erfassung der Feuchte und der Temperatur eingerichtet ist. Durch die Realisierung als kombinierte Sensoreinheit wird sowohl ein platzsparender Aufbau der Sensorvorrichtung erzielt, als auch die Abschätzung von Temperatureinflüssen auf die Transpiration erleichtert.

Gemäß einer weiteren Ausführungsform weist die Sensorvorrichtung eine mechanische Durchflussbegrenzungseinrichtung auf, mittels derer die Querschnittsfläche der ersten Lüftungsöffnung variierbar ist. Beispielsweise kann vorgesehen sein, dass die Gehäuseöffnung des Sensorgehäuses mit einer einstellbaren Blende versehen ist, mittels derer die Querschnittsfläche der Gehäuseöffnung variierbar ist, um eine Diffusionsrate bzw. eine Durchflussrate durch die Gehäuseöffnung zu variieren. Auch ist denkbar, die Leiterplatteneinrichtung oder die Kammerbegrenzungsstruktur mit einer Blende oder einer anderen Durchflussbegrenzungseinrichtung zu versehen, je nachdem wo und wie die erste Lüftungsöffnung realisiert ist. Generell kann eine mechanische Durchflussbegrenzungseinrichtung vorgesehen sein, mittels derer die Querschnittsfläche der Lüftungsöffnung variierbar, wie z.B. die Blende, ein Schieber, ein Ventil oder dergleichen.

Im Folgenden wird die Erfindung unter Bezugnahme auf die Figuren der Zeichnungen erläutert. Von den Figuren zeigen:
- Fig. 1: eine schematische Schnittansicht einer Sensorvorrichtung gemäß einem Ausführungsbeispiel der Erfindung in einem Zustand, in dem die Sensorvorrichtung an einer Pflanzenprobe angebracht ist;
- Fig. 2: eine schematische Schnittansicht einer Sensorvorrichtung gemäß einem weiteren Ausführungsbeispiel der Erfindung in einem Zustand, in dem die Sensorvorrichtung an einer Pflanzenprobe angebracht ist;
- Fig. 3: eine schematische Schnittansicht einer Sensorvorrichtung gemäß einem weiteren Ausführungsbeispiel der Erfindung in einem Zustand, in dem die Sensorvorrichtung an einer Pflanzenprobe angebracht ist;
- Fig. 4: eine schematische Schnittansicht einer Sensorvorrichtung gemäß einem weiteren Ausführungsbeispiel der Erfindung in einem Zustand, in dem die Sensorvorrichtung an einer Pflanzenprobe angebracht ist;
- Fig. 5: eine schematische Ansicht einer Durchflussbegrenzungseinrichtung einer Sensorvorrichtung gemäß einem weiteren Ausführungsbeispiel der Erfindung; und
- Fig. 6: eine schematische Darstellung von Messergebnissen, die mit einer Sensorvorrichtung gemäß einem Ausführungsbeispiel der vorliegenden Erfindung ermittelt wurden.

In den Figuren bezeichnen dieselben Bezugszeichen gleiche oder funktionsgleiche Komponenten, soweit nichts Gegenteiliges angegeben ist.

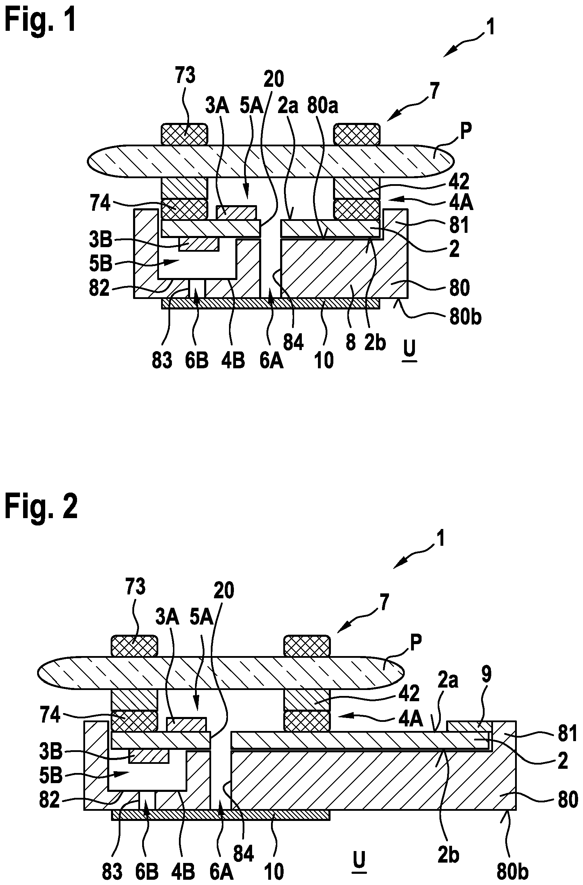

Fig. 1 zeigt beispielhaft eine Sensorvorrichtung 1 zur Messung von Transpiration einer Pflanzenprobe P. Die in Fig. 1 beispielhaft dargestellte Sensorvorrichtung 1 weist eine Leiterplatteneinrichtung 2, einen ersten Feuchtigkeitssensor 3A, einen zweiten Feuchtigkeitssensor 3B, eine Befestigungseinrichtung 7, ein Sensorgehäuse 8 und eine optionale Membran 10 auf.

Die Leiterplatteneinrichtung 2 weist zumindest eine Leiterplatte als Trägersubstrat zur Befestigung und Kontaktierung elektrischer oder elektronischer Bauelemente an einer ersten Oberfläche 2a und/oder an einer entgegengesetzt zu dieser gelegenen zweiten Oberfläche 2b auf. Die Leiterplatteneinrichtung 2 kann beispielsweise eine Trägerplatte aus einem für sichtbares Licht transparenten Material aufweisen, auf welcher elektrische Kontaktstrukturen, wie z.B. Leiterbahnen ausgebildet sind. Die Leiterplatteneinrichtung 2 kann ferner eine Datenschnittstelle (nicht dargestellt) aufweisen, die zur drahtgebundenen oder drahtlosen Datenübertragung eingerichtet ist, z.B. in Form einer Bluetooth-Schnittstelle, einer WIFI-Schnittstelle oder dergleichen.

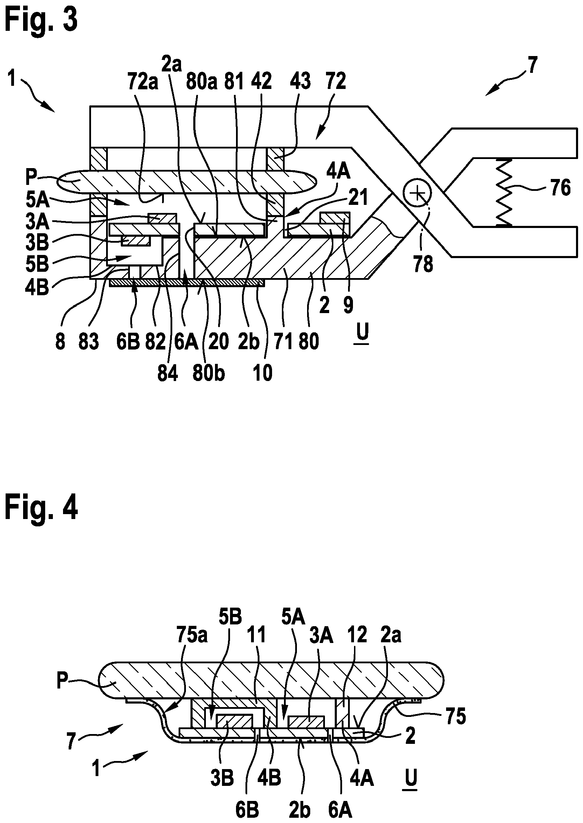

Der erste und der zweite Feuchtigkeitssensor 3A, 3B sind zum Erfassen eines Feuchtegehalts der Luft eingerichtet, insbesondere zum Erfassen einer relativen Luftfeuchte. Die Feuchtigkeitssensoren 3A, 3B können beispielsweise als kapazitive Sensoren realisiert sein, insbesondere als kombinierte Feuchte-Temperatursensoren, die auch zur Erfassung der Temperatur eingerichtet sind.. Wie in Fig. 1 beispielhaft dargestellt ist, kann vorgesehen sein, dass der erste Feuchtigkeitssensor 3A an einer ersten Oberfläche 2a der Leiterplatteneinrichtung 2 angeordnet ist und der zweite Feuchtigkeitssensor 3B an einer entgegengesetzt zu der ersten Oberfläche 2a orientierten zweiten Oberfläche 2b der Leiterplatteneinrichtung 2 angeordnet ist. Es ist aber auch denkbar, beide Feuchtigkeitssensoren 3A, 3B auf der ersten Oberfläche 2a der Leiterplatteneinrichtung 2 anzuordnen, wie dies in Fig. 4 beispielhaft dargestellt ist und nachfolgend noch erläutert wird. Die Feuchtigkeitssensoren 3A, 3B sind jeweils an der Leiterplatteneinrichtung 2 kontaktiert, so dass diese mit elektrischer Spannung versorgt werden können und ihrerseits einen jeweiligen Feuchtegehalt repräsentierende Sensorsignale an der Datenschnittstelle der Leiterplatteneinrichtung 2 bereitstellen können.

Das optionale Sensorgehäuse 8 der in Fig. 1 beispielhaft dargestellten Sensorvorrichtung 1 weist einen blockförmigen Basisabschnitt 80 und einen von einer ersten Oberfläche 80a des Basisabschnitts 80 vorspringenden Rahmenabschnitt 81 auf. Der Rahmenabschnitt 81 definiert oder umgrenzt zumindest teilweise einen Aufnahmebereich der ersten Oberfläche 80a des Basisabschnitts 80. Wie in Fig. 1 weiterhin erkennbar ist, kann der Basisabschnitt 80 eine in der ersten Oberfläche 80a ausgebildete Ausnehmung oder Vertiefung 82 aufweisen, welche in Fig. 1 beispielhaft einen rechteckförmigen Querschnitt aufweist. Der Basisabschnitt 80 weist ferner eine in die Ausnehmung 82 mündende Durchgangsöffnung 83 auf, die sich beispielsweise zwischen einem Grund der Ausnehmung 82 und einer entgegengesetzt zu der ersten Oberfläche 80a orientierten zweiten Oberfläche 80b des Basisabschnitts 80 erstrecken kann. Das Sensorgehäuse 8 kann außerdem eine weitere Gehäuseöffnung 84 aufweisen, welche sich insbesondere zwischen der ersten und der zweiten Oberfläche 80a, 80b des Basisabschnitts 80 erstrecken kann, wie dies in Fig. 1 beispielhaft dargestellt ist.

Wie in Fig. 1 dargestellt, kann die Leiterplatteneinrichtung 2 an dem Sensorgehäuse 8 befestigt sein. Wie in Fig. 1 beispielhaft dargestellt, kann die Leiterplatteneinrichtung 2 insbesondere in dem durch den Rahmenabschnitt 81 definierten Aufnahmebereich des Basisabschnitts 80 angeordnet sein, wobei die zweite Oberfläche 2b der Leiterplatteneinrichtung 2 der ersten Oberfläche 80a des Basisabschnitts 80 zugewandt ist. Allgemein ist die zweite Oberfläche 2b der Leiterplatteneinrichtung 2 dem Sensorgehäuse 8 zugewandt orientiert. Der zweite Feuchtigkeitssensor 3B ist ferner derart auf der zweiten Oberfläche 2b der Leiterplatteneinrichtung 2 positioniert, dass dieser in der Vertiefung 82 des Sensorgehäuses 8 angeordnet ist. Die Vertiefung 82 bildet somit eine zweite Kammerbegrenzungsstruktur 4B, welche gemeinsam mit der Leiterplatteneinrichtung 2 eine umschlossene beziehungsweise wenigstens teilweise geschlossene zweite Luftkammer 5B ausbildet, in welcher der zweite Feuchtigkeitssensor 3B aufgenommen ist. Die Durchgangsöffnung 83 bildet eine zweite Lüftungsöffnung 6B, welche die zweite Luftkammer 5B in fluidisch leitender Weise mit der Umgebung U verbindet. Alternativ könnte die zweite Lüftungsöffnung 6B auch in der Leiterplatteneinrichtung 2 ausgebildet sein. Somit kann der zweite Feuchtigkeitssensor 3B eine Umgebungsluftfeuchte in der zweiten Luftkammer 5B erfassen.

Die in Fig. 1 beispielhaft dargestellte Befestigungseinrichtung 7 weist ein erstes Magnetstück 73, ein zweites Magnetstück 74 und einen optionalen Anlageabschnitt 42 auf. Das erste und das zweite Magnetstück 73, 74 weisen vorteilhaft eine zueinander korrespondierende Umfangsgestaltung auf und können beispielsweise als ringförmige Stücke realisiert sein, wie dies in Fig. 1 beispielhaft und in schematische Weise dargestellt ist. Allgemein sind das erste und das zweite Magnetstück 73, 74 als Rahmenstücke realisiert. Das erste und/oder das zweite Magnetstück 73, 74 sind aus einem magnetischen oder magnetisierbaren Material gebildet. Beispielsweise kann das erste Magnetstück 73 aus einem magnetischen Material und das zweite Magnetstück 74 aus einem magnetisierbaren Material gebildet sein, so dass die Magnetstücke 73, 74 sich gegenseitig anziehen.

Wie in Fig. 1 dargestellt, ist das zweite Magnetstück 74 an der ersten Oberfläche 2a der Leiterplatteneinrichtung 2 befestigt, z.B. mit dieser verklebt. Das zweite Magnetstück 74 definiert durch seine rahmenförmige Gestaltung eine Ausnehmung. Das zweite Magnetstück 74 ist derart auf der Leiterplatteneinrichtung 2 positioniert, dass es den ersten Feuchtigkeitssensor 3A umgibt oder umrahmt bzw. dass der erste Feuchtigkeitssensor 3A in der durch das Magnetstück 74 definierten Ausnehmung angeordnet ist. Damit bildet das zweite Magnetstück 74 zumindest teilweise eine erste Kammerbegrenzungsstruktur 4A die gegenüber der Leiterplatteneinrichtung 2 vorspringt und den ersten Feuchtigkeitssensor 3A umrahmt.

Der optionale Anlageabschnitt 42 ist aus einem elastisch verformbaren, gummiartigen Material, wie z.B. einem Silikonmaterial gebildet. Wie in Fig. 1 beispielhaft dargestellt, kann der Anlageabschnitt 42 an einer entgegengesetzt zu der Leiterplatteneinrichtung 2 orientierten Oberfläche des zweiten Magnetstücks 74 angeordnet bzw. befestigt, z.B. angeklebt oder aufvulkanisiert sein.

Wie in Fig. 1 erkennbar ist, wird zur Messung der Transpiration die Pflanzenprobe P zwischen ersten Magnetstück 73 und dem zweiten Magnetstück 74 bzw. dem Anlageabschnitt 42 eingeklemmt. Das zweite Magnetstück 74 bzw. das zweite Magnetstück 74 und die Leiterplatteneinrichtung 2 bilden somit gemeinsam mit der Pflanzenprobe P eine umschlossene beziehungsweise wenigstens teilweise geschlossene erste Luftkammer 5A, in welcher der erste Feuchtigkeitssensor 3A angeordnet ist. Dieser kann somit eine Luftfeuchte in der ersten Luftkammer 5A, die sich abhängig von der Transpiration der Pflanzenprobe P ändert, erfassen. Das zweite Magnetstück 74 bzw. das zweite Magnetstück 74 und der Anlageabschnitt 42 bilden somit eine erste Kammerbegrenzungsstruktur 4A zur Anlage an die Pflanzenprobe P, wobei die erste Kammerbegrenzungsstruktur 4A gegenüber der Leiterplatteneinrichtung 2 vorspringt und den ersten Feuchtigkeitssensor 3A derart umrahmt, dass, wenn die Kammerbegrenzungsstruktur 4A an der Pflanzenprobe P anliegt, der erste Feuchtigkeitssensor 3A in einer von der Pflanzenprobe P und der ersten Kammerbegrenzungsstruktur 4A begrenzten, geschlossenen ersten Luftkammer 5A angeordnet ist. Wie in Fig. 1 ferner erkennbar ist, weist die Leiterplatteneinrichtung 2 eine sich zwischen der ersten und der zweiten Oberfläche 2a, 2b erstreckende Plattendurchgangsöffnung 20 auf. Diese kann insbesondere fluchtend zu der Gehäuseöffnung 84 angeordnet sein, wie dies in Fig. 1 beispielhaft dargestellt ist. Allgemein ist die Gehäuseöffnung 84 fluidisch leitend mit der Plattendurchgangsöffnung 20 verbunden, so dass die Leiterplatteneinrichtung 2 eine durch die Plattendurchgangsöffnung 20 gebildete erste Lüftungsöffnung 6A aufweist, welche die erste Luftkammer 5A in fluidisch leitender Weise mit der Umgebung U verbindet. Grundsätzlich ist auch denkbar, die erste Lüftungsöffnung 6A durch eine Durchgangsöffnung in dem zweiten Magnetstück 74 oder allgemein durch eine Durchgangsöffnung in der ersten Kammerbegrenzungsstruktur 4A zu realisieren.

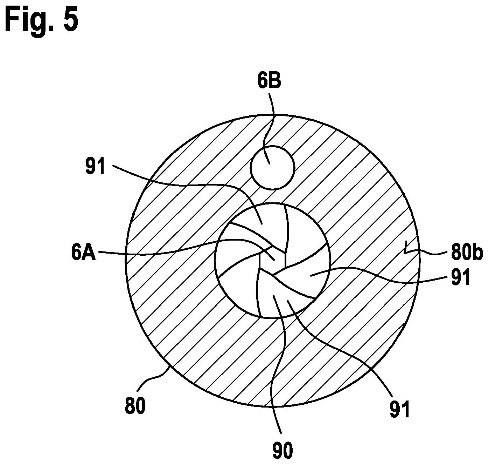

Zur Einstellung bzw. Variation eines Strömungsquerschnitts der ersten Lüftungsöffnung 6A kann eine mechanische Durchflussbegrenzungseinrichtung 90 vorgesehen sein, z.B. in Form einer Blende, wie dies in Fig. 5 beispielhaft und schematisch dargestellt ist. Die Durchflussbegrenzungseinrichtung 90 kann beispielsweise am derart am Basisabschnitt 80 des Sensorgehäuses 8 angeordnet sein, dass die Querschnittsfläche der Gehäuseöffnung 84 mittels der Durchflussbegrenzungseinrichtung 90 variierbar ist. In Fig. 5 ist beispielhaft eine solche Anordnung dargestellt. Die als Blende realisierte Durchflussbegrenzungseinrichtung 90 weist mehrere Lamellen 91 auf, welche in einer Richtung quer zu der Längsachse der Gehäuseöffnung 84, z.B. entlang einer gekrümmten Bahn geführt sind, so dass diese zur Variation des Querschnitts in die Gehäuseöffnung 84 hinein und aus dieser heraus bewegbar sind. Selbstverständlich sind auch andere Gestaltungen der Durchflussbegrenzungseinrichtung 90 denkbar, z.B. als einfacher Schieber.

Um einem Absterben der Pflanzenprobe P im Bereich der Magnetstücke 73, 74 entgegenzuwirken, können diese zumindest teilweise aus einem für sichtbares Licht transparenten Material gebildet sein. Z.B. kann an eine der Pflanzenprobe P zugewandte Oberfläche der Magnetstücke 73, 74 jeweils aus einem transparenten Kunststoffmaterial, wie z.B. Polymethylmethacrylat (PMMA) gebildet sein.

Die optionale Membran 10 ist aus einem gasdurchlässigen, porösen Material, wie z.B. Teflon oder Polytetrafluorethylen (PTFE). Wie in Fig. 1 außerdem beispielhaft dargestellt ist, kann die Membran 10 insbesondere an dem Sensorgehäuse 8 bzw. der zweiten Oberfläche 80b des Basisabschnitts 80 befestigt sein und deckt vorzugsweise sowohl die Durchgangsöffnung 83 als auch die Gehäuseöffnung 84 ab. Damit deckt die Membran 10 die erste und die zweite Lüftungsöffnung 6A, 6B ab. Auf diese Weise wird verhindert, dass Schmutz oder Wasser aus der Umgebung in die Luftkammern 5A, 5B eindringt. In Fig. 1 ist beispielhaft dargestellt, dass eine einzige Membran 10 die erste und die zweite Lüftungsöffnung 6A, 6B abdeckt. Es ist selbstverständlich auch denkbar, dass jede der Lüftungsöffnungen 6A, 6B durch jeweils eine separate Membran abgedeckt wird.

Fig. 2 zeigt eine weitere Sensorvorrichtung 1. Diese unterscheidet sich von der in Fig. 1 beispielhaft dargestellten Sensorvorrichtung 1 insbesondere dadurch, dass ein Strahlungssensor 9 vorgesehen ist. Der Strahlungssensor 9 dient zur Erfassung von einfallender Strahlung, wie z.B. Sonneneinstrahlung. Wie in Fig. 2 beispielhaft dargestellt ist, kann der Strahlungssensor 9 insbesondere auf der ersten Oberfläche 2a der Leiterplatteneinrichtung 2 angeordnet und kontaktiert sein, so dass dieser Sensorsignale an der Datenschnittstelle (nicht dargestellt) bereitstellen kann. In Fig. 2 ist beispielhaft gezeigt, dass der Strahlungssensor 9 unmittelbar benachbart zu dem Rahmenabschnitt 81 des Gehäuses 8 in einem Randbereich der Leiterplatteneinrichtung 2 angeordnet ist. Allgemein ist vorgesehen, dass der Strahlungssensor an der Leiterplatteneinrichtung 2 außerhalb der ersten und zweiten Kammerbegrenzungsabschnitte 4A, 4B angeordnet ist. In ähnlicher Weise können auch noch weitere Sensoren zur Erfassung thermodynamischer Größen oder anderer die Transpiration beeinflussender Umgebungsbedingungen, wie z.B. CO₂ Sensoren oder Anemometer vorgesehen sein.

Fig. 3 zeigt beispielhaft eine weitere Sensorvorrichtung 1, die sich von den in den Fign. 1 und 2 gezeigten Sensorvorrichtungen 1 insbesondere durch die Gestaltung der Befestigungsvorrichtung 7 und die Realisierung der ersten Kammerbegrenzungsstruktur 4A unterscheidet.

Der optionale Anlageabschnitt 42 ist an dem Rahmenabschnitt 81 befestigt, z.B. aufgeklebt oder aufvulkanisiert. Der Rahmenabschnitt 81 weist bei dem in Fig. 3 gezeigten Beispiel eine Unterbrechung (nicht dargestellt) auf, durch welche ein einen zentralen Bereich mit einem Randbereich verbindender Verbindungsabschnitt der Leiterplatteneinrichtung 2 durchgeführt ist. In korrespondierender Weise umfasst auch die Leiterplatteneinrichtung 2 eine Unterbrechung 21 auf, durch welche der Rahmenabschnitt 81 hindurch ragt. Ähnlich wie in Fig. 2 weist die Sensorvorrichtung 1 den optionalen Strahlungssensor 9 auf, welcher im Randbereich der Leiterplatteneinrichtung 2 angeordnet ist. Wie in Fig. 3 schematisch dargestellt ist, wird die erste Kammerbegrenzungsstruktur 4A somit durch den Rahmenabschnitt 81 des Sensorgehäuses 8 und durch den optionalen Anlageabschnitt 42 gebildet. Somit ist die erste Kammerbegrenzungsstruktur 4A zumindest teilweise durch einen Vorsprung 81 des Sensorgehäuses 8 ausgebildet.

In Fig. 3 sind anstelle der Magnetstücke 73, 74 ein erstes Klemmstück 71 und ein zweites Klemmstück 72 vorgesehen, die gegeneinander bzw. aufeinander zu vorgespannt sind. Das erste Klemmstück 71 wird durch das Sensorgehäuse 8 gebildet bzw. ist einstückig mit diesem ausgebildet. Somit ist das erste Klemmstück an die Leiterplatteneinrichtung 2 gekoppelt. Wie in Fig. 3 beispielhaft dargestellt ist, kann das zweite Klemmstück 72 insbesondere um eine Drehachse 75 drehbar an dem ersten Klemmstück 71 gelagert sein. Das zweite Klemmstück 72 erstreckt sich gegenüberliegend bzw. entlang der ersten Oberfläche 2a Leiterplatteneinrichtung 2. Optional kann an einer der Leiterplatteneinrichtung 2 zugewandten Oberfläche 72a des zweiten Klemmstücks 72 ein weiterer Anlageabschnitt 43 aus elastisch verformbaren, gummiartigem Material, wie z.B. Silikonmaterial, vorgesehen sein, der eine zu der Rahmenstruktur 81 korrespondierende Gestalt aufweist. Wie in Fig. 3 schematisch dargestellt, weist die Befestigungseinrichtung 7 eine Vorspanneinrichtung 76, z.B. in Form einer Feder auf, welche die Klemmstücke 71, 72 derart vorspannt, dass im Bereich der Leiterplatteneinrichtung 2 eine von dem zweiten Klemmstück 72 in Richtung des ersten Klemmstücks 71 wirkende Klemmkraft erzeugt wird. Die Klemmstücke 71, 72 bzw. zumindest eines der Klemmstücke 71, 72 ist vorzugsweise aus einem für sichtbares Licht transparenten Material ausgebildet, um eine Verschattung der Pflanzenprobe P zu verringern. Alternativ oder zusätzlich hierzu kann auch vorgesehen sein, dass das zweite Klemmstück 72 und/oder das erste Klemmstück 71 perforiert ausgeführt ist, also mit einer Vielzahl von Aussparungen (nicht dargestellt) versehen ist, um die Verschattungen durch das die Klemmstücke 71, 72 weiter zu reduzieren. Falls die Klemmstücke 71, 72 nicht aus einem transparenten Material gefertigt sind, kann optional ein zusätzlicher Lichtleiter (nicht dargestellt) in eines der Klemmstücke 71, 72 eingebracht sein, so dass der optionale Strahlungssensor 9 die Strahlungsbedingungen in der Umgebung U erfassen kann.

Wie in Fig. 3 beispielhaft dargestellt ist, kann die Pflanzenprobe P zwischen der durch den Rahmenabschnitt 81 des Sensorgehäuses 8 und durch den optionalen Anlageabschnitt 42 gebildeten ersten Kammerbegrenzungsstruktur 4A und dem zweiten Klemmstück 72 bzw. dem Anlageabschnitt 43 des zweiten Klemmstücks 72 eingeklemmt werden. Der Rahmenabschnitt 81 springt, wie in Fig. 3 gezeigt, gegenüber der Leiterplatteneinrichtung 2 vor und umrahmt den ersten Feuchtigkeitssensor 3A derart, dass, wenn die Kammerbegrenzungsstruktur 4A an der Pflanzenprobe P anliegt, der erste Feuchtigkeitssensor 3A in einer von der Pflanzenprobe P und der ersten Kammerbegrenzungsstruktur 4A begrenzten, geschlossenen ersten Luftkammer 5A angeordnet ist.

Alternativ zu den in den Fign. 1 bis 3 gezeigten Sensoreinrichtungen 1 ist auch denkbar, das Sensorgehäuse 8 wie in den Fign. 1 oder 3 dargestellt zu realisieren, und ein Magnetstück auf den Rahmenabschnitt 81 des Sensorgehäuses 8 aufzusetzen oder zumindest den Rahmenabschnitt 81 des Sensorgehäuses 8 oder aus einem magnetischen oder magnetisierbaren Material herzustellen. Die Befestigung der Pflanzenproben P an der in diesem Fall zumindest teilweise durch den Rahmenabschnitt 81 gebildeten Kammerbegrenzungsstruktur 4A kann dann durch das korrespondierend zu dem Rahmenabschnitt 81 gestaltete zweite Magnetstück 73 erfolgen. Allgemein kann somit vorgesehen sein, dass die erste Kammerbegrenzungsstruktur 4A zumindest teilweise durch ein magnetisches oder magnetisierbares Material gebildet ist, und dass die Befestigungseinrichtung 7 ein erstes Magnetstück 73 zur magnetischen Kopplung mit dem magnetischen oder magnetisierbaren Material der ersten Kammerbegrenzungstruktur 4A aufweist.

Fig. 4 zeigt eine weitere Sensorvorrichtung 1 mit einer Leiterplatteneinrichtung 2, einem ersten und einem zweiten Feuchtesensor 3A, 3B und einer Befestigungseinrichtung 7. Die Leiterplatteneinrichtung 2 und die Feuchtesensoren 3A, 3B können wie voranstehend beschrieben ausgebildet sein. Wie in Fig. 4 beispielhaft dargestellt ist, sind der erste und der zweite Feuchtesensor 3A, 3B beide auf der ersten Oberfläche 2a der Leiterplatteneinrichtung 2 angeordnet und kontaktiert. Wie in Fig. 4 schematisch dargestellt ist, weist die Sensorvorrichtung 1 eine Kappe oder einen Dom 11 auf, welcher an der ersten Oberfläche 2a der Leiterplatteneinrichtung 2 befestigt und sich über den zweiten Feuchtesensor 3B wölbt, so dass dieser zwischen der Leiterplatteneinrichtung 2 und der Kappe 11 eingeschlossen ist. Die Kappe 11 bildet somit die zweiten Kammerbegrenzungsstruktur 4B aus, welche gemeinsam mit der Leiterplatteneinrichtung 2 eine umschlossene beziehungsweise wenigstens teilweise geschlossene zweite Luftkammer 5B ausbildet, in welcher der zweite Feuchtigkeitssensor 3B aufgenommen ist.

Wie in Fig. 4 außerdem dargestellt, ist optional ein Rahmen 12 vorgesehen, welcher an der ersten Oberfläche 2a der Leiterplatteneinrichtung 2 befestigt ist und den ersten Feuchtigkeitssensor 3A umrahmt. Der Rahmen 12 kann beispielsweise direkt an die Kappe 11 anschließen, wie dies in Fig. 4 schematisch dargestellt ist.

Wie in Fig. 4 beispielhaft dargestellt ist, ist in der Leiterplatteneinrichtung 2 eine sich zwischen der ersten und der zweiten Oberfläche 2a, 2b erstreckende erste Öffnung vorgesehen, die in die zweite Luftkammer 5B mündet und damit die zweite Lüftungsöffnung 6B ausbildet. Ferner ist in der Leiterplatteneinrichtung 2 eine sich zwischen der ersten und der zweiten Oberfläche 2a, 2b erstreckende zweite Öffnung vorgesehen, die innerhalb des Rahmens 12 angeordnet ist und damit die erste Lüftungsöffnung 6A ausbildet.

Die Befestigungseinrichtung 7 ist in Fig. 4 beispielhaft als eine Art Klebeband ausgebildet und weist insbesondere ein mit der Leiterplatteneinrichtung 2 verbundenes Befestigungsband 75 auf, das eine Klebstoffschicht 75a zum Kleben an die Pflanzenprobe P aufweist. Wie in beispielhaft dargestellt ist, kann das Befestigungsband 75 an der zweiten Oberfläche 2b der Leiterplatteneinrichtung 2 befestigt bzw. angeklebt sein, wobei das Befestigungsband 75 seitlich über die Leiterplatteneinrichtung 2 hinausragende Laschen bildet, die durch die Klebstoffschicht 75a an die Pflanzenprobe P angeklebt werden können, wie dies in Fig. 4 beispielhaft dargestellt ist. Wie in Fig. 4 weiterhin erkennbar, ist liegt der optionale Rahmen 12 an der Pflanzenprobe P an, so dass dieser eine erste Kammerbegrenzungsstruktur 4A bildet die den ersten Feuchtigkeitssensor 3A derart umrahmt, dass, wenn die Kammerbegrenzungsstruktur 4A an der Pflanzenprobe P anliegt, der erste Feuchtigkeitssensor 3A in einer von der Pflanzenprobe P und der ersten Kammerbegrenzungsstruktur 4A begrenzten, umschlossenen beziehungsweise wenigstens teilweise geschlossenen ersten Luftkammer 5A angeordnet ist. Der Rahmen 12 kann grundsätzlich auch weggelassen werden. In diesem Fall bildet das Befestigungsband 75, eine erste Kammerbegrenzungsstruktur 4A, die den ersten Feuchtigkeitssensor 3A derart umrahmt, dass, wenn die Kammerbegrenzungsstruktur 4A an der Pflanzenprobe P anliegt, der erste Feuchtigkeitssensor 3A in einer von der Pflanzenprobe P und der ersten Kammerbegrenzungsstruktur 4A begrenzten, geschlossenen ersten Luftkammer 5A angeordnet ist, wie aus Fig. 4 ersichtlich ist.

Auch wenn in Fig. 4 keine Membran 10 dargestellt ist, kann selbstverständlich vorgesehen sein, dass die erste und die zweite Lüftungsöffnung 6A, 6B jeweils durch eine Membran 10 abgedeckt sind.

Durch den Aufbau der in den Fign. 1 bis 4 beispielhaft dargestellten Sensorvorrichtung 1 kann in der durch die erste Kammerbegrenzungsstruktur 4A definierten ersten Luftkammer 5A eine Luftfeuchte in unmittelbarer Nähe der Pflanzenprobe P, z.B. an einer Unterseite eines Blatts, erfasst werden. In der getrennten zweiten Luftkammer kann die Luftfeuchte der Umgebungsluft gemessen werden.

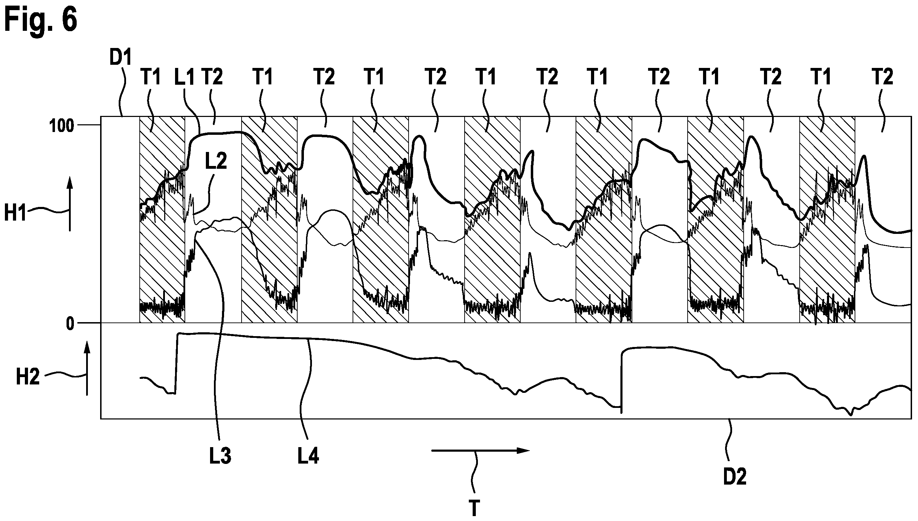

Fig. 6 zeigt beispielhaft Messergebnisse, die mit einer Sensorvorrichtung 1 gemäß der voranstehenden Beschreibung an einer Pflanzenprobe P ermittelt wurden. In dem oberen Diagramm D1 ist auf der Hochachse H1 die relative Feuchte und entlang der Längsachse T die Zeit aufgetragen. In dem unteren Diagramm D2 ist entlang der Hochachse H2 der Wassergehalt im Boden aufgetragen, in dem die Pflanze, deren Pflanzenprobe untersucht wird, wächst.

Die Linie L1 im oberen Diagramm D1 gibt die durch den ersten Feuchtesensor 3A erfasste erste Luftfeuchtigkeit in der ersten Luftkammer 5A wieder. Die Linie L2 im oberen Diagramm D1 gibt die durch den zweiten Feuchtesensor 3B erfasste zweite Luftfeuchtigkeit in der zweiten Luftkammer 5B,also die Umgebungsfeuchte wieder. Die Linie L3 im oberen Diagramm D1 gibt eine Differenz zwischen der ersten und der zweiten erfassten Luftfeuchte wieder. In dem oberen Diagramm sind außerdem erste Zeitbereiche T1 und zweite Zeitbereiche T2 gekennzeichnet, wobei in den ersten Zeitbereichen T1 keine Lichtstrahlung vorhanden war und in den zweiten Zeitbereichen T2 die Pflanzenprobe Lichtstrahlung ausgesetzt war. Die Linie L4 im unteren Diagramm D2 zeigt einen Wassergehalt im Boden an.

Wie in dem oberen Diagramm D1 erkennbar ist, steigt über Tag die erste Luftfeuchtigkeit in der ersten Luftkammer 5A in den zweiten Zeiträumen T2 anfangs stark an, was eine Transpiration der Pflanzenprobe P anzeigt. Während der zweiten Zeiträume T2 sind die erste und die zweite Luftfeuchte nahezu gleich. Wie aus einem Vergleich zwischen dem oberen Diagramm D1 mit dem unteren Diagramm D2 hervorgeht, sinkt die erste Luftfeuchte umso schneller wieder ab, je weniger Wasser im Boden vorhanden ist. Das heißt, die Transpiration der Pflanze ist umso geringer, je weniger Wasser ihr zur Verfügung steht. Somit kann über die Transpiration der Pflanzenprobe P, die mittels der Sensoreinrichtung 1 erfassbar ist, auf den Bewässerungszustand der Pflanze geschlossen werden. Durch das Erfassen der Umgebungsluftfeuchte durch den zweiten Feuchtigkeitssensor 3B und gegebenenfalls das Erfassen der Einstrahlung durch den Strahlungssensor 9 kann ermittelt werden, ob die Transpiration der Pflanze sich aufgrund sich ändernder Wasserversorgung oder aufgrund äußerer Einflüsse ändert. So sinkt beispielsweise die Transpiration der Pflanzenprobe P mit steigender Umgebungsluftfeuchtigkeit und steigt mit zunehmender Lichteinstrahlung.

Obwohl die vorliegende Erfindung vorstehend anhand von Ausführungsbeispielen exemplarisch erläutert wurde, ist sie darauf nicht beschränkt, sondern auf vielfältige Weise modifizierbar. Insbesondere sind auch Kombinationen der voranstehenden Ausführungsbeispiele denkbar.

## Patentansprüche

1. Sensorvorrichtung (1) zur Messung von Transpiration einer Pflanzenprobe (P), mit:
einer Leiterplatteneinrichtung (2);
einem an der Leiterplatteneinrichtung (2) angeordneten und kontaktierten ersten Feuchtigkeitssensor (3A) zum Erfassen einer ersten Luftfeuchte im Bereich der Pflanzenprobe (P);
einem an der Leiterplatteneinrichtung (2) angeordneten und kontaktierten zweiten Feuchtigkeitssensor (3B) zum Erfassen einer Umgebungsluftfeuchte;
einer ersten Kammerbegrenzungsstruktur (4A) zur Anlage an die Pflanzenprobe (P), wobei die erste Kammerbegrenzungsstruktur (4A) gegenüber der Leiterplatteneinrichtung (2) vorspringt und den ersten Feuchtigkeitssensor (3A) derart umrahmt, dass, wenn die Kammerbegrenzungsstruktur (4A) an der Pflanzenprobe (P) anliegt, der erste Feuchtigkeitssensor (3A) in einer von der Pflanzenprobe (P) und der ersten Kammerbegrenzungsstruktur (4A) begrenzten, umschlossenen ersten Luftkammer (5A) angeordnet ist, wobei die Leiterplatteneinrichtung (2) oder die erste Kammerbegrenzungsstruktur (4A) eine erste Lüftungsöffnung (6A) aufweist, welche die erste Luftkammer (5A) in fluidisch leitender Weise mit der Umgebung (U) verbindet;
einer zweiten Kammerbegrenzungsstruktur (4B), welche gemeinsam mit der Leiterplatteneinrichtung (2) eine umschlossene zweite Luftkammer (5B) ausbildet, in welcher der zweite Feuchtigkeitssensor (3B) aufgenommen ist,
wobei die Leiterplatteneinrichtung (2) oder die zweite Kammerbegrenzungsstruktur (4B) eine zweite Lüftungsöffnung (6B) aufweist, welche die zweite Luftkammer (5B) in fluidisch leitender Weise mit der Umgebung (U) verbindet; und
einer Befestigungseinrichtung (7) zur Befestigung der Pflanzenprobe (P) an der ersten Kammerbegrenzungsstruktur (4A).

2. Sensorvorrichtung (1) nach Anspruch 1, wobei der erste Feuchtigkeitssensor (3A) an einer ersten Oberfläche (2a) der Leiterplatteneinrichtung (2) angeordnet ist und der zweite Feuchtigkeitssensor (3B) an einer entgegengesetzt zu der ersten Oberfläche (2a) orientierten zweiten Oberfläche (2b) der Leiterplatteneinrichtung (2) angeordnet ist, wobei die Leiterplatteneinrichtung (2) an einem Sensorgehäuse (8) befestigt und mit der zweiten Oberfläche (2b) dem Sensorgehäuse (8) zugewandt orientiert ist, und wobei die zweite Kammerbegrenzungsstruktur (4B) durch eine Vertiefung (82) des Sensorgehäuses (8) gebildet ist.

3. Sensorvorrichtung (1) nach Anspruch 2, wobei die zweite Lüftungsöffnung (6B) durch eine in die Vertiefung (82) des Sensorgehäuses mündende Durchgangsöffnung (83) des Sensorgehäuses (8) ausgebildet ist.

4. Sensorvorrichtung (1) nach Anspruch 2 oder 3, wobei die erste Lüftungsöffnung (6A) durch eine sich zwischen der ersten und der zweiten Oberfläche (2a, 2b) der Leiterplatteneinrichtung (2) erstreckende Plattendurchgangsöffnung (20) ausgebildet ist, und wobei das Sensorgehäuse (8) eine fluidisch leitend mit der Plattendurchgangsöffnung verbundene Gehäuseöffnung (84) aufweist, welche mit der Umgebung (U) verbunden ist.

5. Sensorvorrichtung (1) nach einem der Ansprüche 2 bis 4, wobei die erste Kammerbegrenzungsstruktur (4A) zumindest teilweise durch einen Vorsprung (81) des Sensorgehäuses (8) ausgebildet ist.

6. Sensorvorrichtung (1) nach einem der voranstehenden Ansprüche, wobei die Befestigungseinrichtung (7) ein an die Leiterplatteneinrichtung (2) gekoppeltes erstes Klemmstück (71), welches vorzugsweise durch das Sensorgehäuse (8) ausgebildet ist, und ein gegenüber dem ersten Klemmstück (71) vorgespanntes, dem ersten Kammerbegrenzungsabschnitt (4A) gegenüberliegend angeordnetes zweites Klemmstück (72) aufweist.

7. Sensorvorrichtung (1) nach einem der Ansprüche 1 bis 5, wobei die erste Kammerbegrenzungsstruktur (4A) zumindest teilweise durch ein magnetisches oder magnetisierbares Material gebildet ist, und wobei die Befestigungseinrichtung (7) ein erstes Magnetstück (73) zur magnetischen Kopplung mit dem magnetischen oder magnetisierbaren Material der ersten Kammerbegrenzungstruktur (4A) aufweist.

8. Sensorvorrichtung (1) nach Anspruch 7, wobei die erste Kammerbegrenzungsstruktur (4A) durch ein an der Leiterplatteneinrichtung (2) befestigtes zweites Magnetstück (74) ausgebildet ist.

9. Sensorvorrichtung (1) nach einem der Ansprüche 1 bis 5, wobei die Befestigungseinrichtung (7) durch ein mit der Leiterplatteneinrichtung (2) verbundenes Befestigungsband (75), welches eine Klebstoffschicht zum Kleben an die Pflanzenprobe (P) aufweist, gebildet ist.

10. Sensorvorrichtung (1) nach einem der voranstehenden Ansprüche, wobei die erste Kammerbegrenzungsstruktur (4A) einen Anlageabschnitt (42) aus einem elastisch verformbaren Material, insbesondere einem Silikonmaterial, zur Anlage an die Pflanzenprobe (P) aufweist.

11. Sensorvorrichtung (1) nach einem der voranstehenden Ansprüche zusätzlich aufweisend:
einen an der Leiterplatteneinrichtung (2) außerhalb der ersten und zweiten Kammerbegrenzungsabschnitte (4A, 4B) angeordneten Strahlungssensor (9) zum Erfassen einfallender Strahlung.

12. Sensorvorrichtung (1) nach einem der voranstehenden Ansprüche, wobei die erste und die zweite Lüftungsöffnung (6A, 6B) jeweils durch eine gasdurchlässige Membran (10) abgedeckt sind.

13. Sensorvorrichtung (1) nach einem der voranstehenden Ansprüche, wobei der erste Feuchtigkeitssensor (3A) und/oder der zweite Feuchtigkeitssensor (3B) als kombinierte Sensoreinheit realisiert ist, die zur Erfassung der Feuchte und der Temperatur eingerichtet ist.

14. Sensorvorrichtung (1) nach einem der voranstehenden Ansprüche, zusätzlich aufweisend:
eine mechanische Durchflussbegrenzungseinrichtung (90), mittels derer die Querschnittsfläche der ersten Lüftungsöffnung (6A) variierbar ist.

## Claims

1. Sensor apparatus (1) for measuring transpiration of a plant specimen (P), comprising:
a printed circuit board device (2);
a first moisture sensor (3A) for sensing a first air humidity in the region of the plant specimen (P), said first moisture sensor being arranged and contacted on the printed circuit board device (2);
a second moisture sensor (3B) for sensing an ambient air humidity, said second moisture sensor being arranged and contacted on the printed circuit board device (2);
a first chamber bounding structure (4A) for bearing against the plant specimen (P), wherein the first chamber bounding structure (4A) projects relative to the printed circuit board device (2) and frames the first moisture sensor (3A) in such a way that when the chamber bounding structure (4A) bears against the plant specimen (P), the first moisture sensor (3A) is arranged in an enclosed first air chamber (5A) bounded by the plant specimen (P) and the first chamber bounding structure (4A), wherein the printed circuit board device (2) or the first chamber bounding structure (4A) has a first ventilation opening (6A), which connects the first air chamber (5A) to the surrounding environment (U) in a fluidically conducting manner;
a second chamber bounding structure (4B), which together with the printed circuit board device (2) forms an enclosed second air chamber (5B), in which the second moisture sensor (3B) is accommodated, wherein the printed circuit board device (2) or the second chamber bounding structure (4B) has a second ventilation opening (6B), which connects the second air chamber (5B) to the surrounding environment (U) in a fluidically conducting manner; and
a securing device (7) for securing the plant specimen (P) to the first chamber bounding structure (4A).

2. Sensor apparatus (1) according to Claim 1, wherein the first moisture sensor (3A) is arranged on a first surface (2a) of the printed circuit board device (2) and the second moisture sensor (3B) is arranged on a second surface (2b) of the printed circuit board device (2), said second surface being oriented oppositely to the first surface (2a), wherein the printed circuit board device (2) is secured to a sensor housing (8) and is oriented in a manner facing the sensor housing (8) by way of the second surface (2b), and wherein the second chamber bounding structure (4B) is formed by a depression (82) of the sensor housing (8).

3. Sensor apparatus (1) according to Claim 2, wherein the second ventilation opening (6B) is embodied by a through opening (83) of the sensor housing (8) that leads into the depression (82) of the sensor housing.

4. Sensor apparatus (1) according to Claim 2 or 3, wherein the first ventilation opening (6A) is embodied by a board through opening (20) extending between the first and second surfaces (2a, 2b) of the printed circuit board device (2), and wherein the sensor housing (8) has a housing opening (84) connected to the board through opening in a fluidically conducting manner and connected to the surrounding environment (U).

5. Sensor apparatus (1) according to any of Claims 2 to 4, wherein the first chamber bounding structure (4A) is at least partly embodied by a projection (81) of the sensor housing (8).

6. Sensor apparatus (1) according to any of the preceding claims, wherein the securing device (7) has a first clamping piece (71) coupled to the printed circuit board device (2), said first clamping piece preferably being embodied by the sensor housing (8), and a second clamping piece (72), which is prestressed relative to the first clamping piece (71) and is arranged opposite the first chamber bounding section (4A).

7. Sensor apparatus (1) according to any of Claims 1 to 5, wherein the first chamber bounding structure (4A) is at least partly formed by a magnetic or magnetizable material, and wherein the securing device (7) has a first magnetic piece (73) for magnetic coupling to the magnetic or magnetizable material of the first chamber bounding structure (4A).

8. Sensor apparatus (1) according to Claim 7, wherein the first chamber bounding structure (4A) is embodied by a second magnetic piece (74) secured to the printed circuit board device (2).

9. Sensor apparatus (1) according to any of Claims 1 to 5, wherein the securing device (7) is formed by a securing tape (75) connected to the printed circuit board device (2) and having an adhesive layer for adhesively bonding to the plant specimen (P).

10. Sensor apparatus (1) according to any of the preceding claims, wherein the first chamber bounding structure (4A) has a bearing section (42) composed of an elastically deformable material, in particular a silicon material, for bearing against the plant specimen (P).

11. Sensor apparatus (1) according to any of the preceding claims, additionally having:
a radiation sensor (9) for sensing incident radiation, said radiation sensor being arranged on the printed circuit board device (2) outside the first and second chamber bounding sections (4A, 4B).

12. Sensor apparatus (1) according to any of the preceding claims, wherein the first and the second ventilation openings (6A, 6B) are each covered by a gas-permeable membrane (10).

13. Sensor apparatus (1) according to any of the preceding claims, wherein the first moisture sensor (3A) and/or the second moisture sensor (3B) are/is realised as a combined sensor unit configured for sensing the moisture and the temperature.

14. Sensor apparatus (1) according to any of the preceding claims, additionally having:
a mechanical flow limiting device (90), by means of which the cross-sectional area of the fist ventilation opening (6A) is variable.

## Revendications

1. Appareil de détection (1) pour la mesure de la transpiration d'un échantillon de plante (P), avec :
un dispositif de plaques conductrices (2) ;
un premier capteur d'humidité (3A) disposé et mis en contact au niveau du dispositif de plaques conductrices (2) pour détecter une première humidité d'air dans la zone de l'échantillon de plante (P) ;
un deuxième capteur d'humidité (3B) disposé et mis en contact au niveau du dispositif de plaques conductrices (2) pour détecter une humidité d'air ambiant ;
une première structure de délimitation de compartiment (4A) à installer au niveau de l'échantillon de plante (P), la première structure de délimitation de compartiment (4A) étant précontrainte par rapport au dispositif de plaques conductrices (2) et encadrant le premier capteur d'humidité (3A) de telle sorte que lorsque la structure de délimitation de compartiment (4A) bute contre l'échantillon de plante (P), le premier capteur d'humidité (3A) est disposé dans un premier compartiment d'air (5A) enserré délimité par l'échantillon de plante (P) et la première structure de délimitation de compartiment (4A), le dispositif de plaques conductrices (2) ou la première structure de délimitation de compartiment (4A) présentant une première ouverture d'aération (6A) reliant le premier compartiment d'air (5A) de façon conductrice sur le plan fluidique avec l'environnement (U) ; une deuxième structure de délimitation de compartiment (4B) formant conjointement avec le dispositif de plaques conductrices (2) un deuxième compartiment d'air (5B) enserré dans lequel le deuxième capteur d'humidité (3B) est logé, le dispositif de plaques conductrices (2) ou la deuxième structure de délimitation de compartiment (4B) comportant une deuxième ouverture d'aération (6B) reliant le deuxième compartiment d'air (5B) de façon conductrice sur le plan fluidique avec l'environnement (U) ; et
un dispositif de fixation (7) servant à fixer l'échantillon de plante (P) à la première structure de délimitation de compartiment (4A).

2. Appareil de détection (1) selon la revendication 1, dans lequel le premier capteur d'humidité (3A) est disposé au niveau d'une première surface (2a) du dispositif de plaques conductrices (2) et le deuxième capteur d'humidité (3B) est disposé au niveau d'une deuxième surface (2b) du dispositif de plaques conductrices (2) orientée de façon opposée par rapport à la première surface (2a), le dispositif de plaques conductrices (2) étant fixé à un carter de capteur (8) et orienté avec la deuxième surface (2b) vers le carter de capteur (8) et la deuxième structure de délimitation de compartiment (4B) étant formée par un renfoncement (82) du carter de capteur (8).

3. Appareil de détection (1) selon la revendication 2, dans lequel la deuxième ouverture d'aération (6B) est réalisée à travers une ouverture traversante (83) du carter de capteur (8) débouchant dans le renfoncement (82) du carter de capteur.

4. Appareil de détection (1) selon la revendication 2 ou 3, la première ouverture d'aération (6A) état réalisée à travers une ouverture traversante de plaque (20) s'étendant entre la première et la deuxième surface (2a, 2b) du dispositif de plaques conductrices (2) et le carter de capteur (8) comportant une ouverture de carter (84) reliée de façon conductrice sur le plan fluidique à l'ouverture traversante de plaque, ladite ouverture de carter étant reliée à l'environnement (U).

5. Appareil de détection (1) selon l'une quelconque des revendications 2 à 4, la première structure de délimitation de compartiment (4A) étant réalisée au moins en partie à travers une saillie (81) du carter de capteur (8) .

6. Appareil de détection (1) selon l'une quelconque des revendications précédentes, dans lequel le dispositif de fixation (7) comporte une premier élément de serrage (71) couplé au dispositif de plaques conductrices (2) et réalisé de préférence à travers le carter de capteur (8) et un deuxième élément de serrage (72) précontraint par rapport au premier élément de serrage (71) et disposé de façon opposée par rapport à la première section de délimitation de compartiment (4A).

7. Appareil de détection (1) selon l'une quelconque des revendications 1 à 5, dans lequel la première structure de délimitation de compartiment (4A) est formée au moins en partie grâce à une matière magnétique ou magnétisable et dans lequel le dispositif de fixation (7) comporte un premier élément magnétique (73) servant au couplage magnétique avec la matière magnétique ou magnétisable de la première structure de délimitation de compartiment (4A) .

8. Appareil de détection (1) selon la revendication 7, dans lequel la première structure de délimitation de compartiment (4A) est réalisée grâce à un deuxième élément magnétique (74) fixé au dispositif de plaques conductrices (2).

9. Appareil de détection (1) selon l'une quelconque des revendications 1 à 5, dans lequel le dispositif de fixation (7) est formé par une bande de fixation (75) reliée au dispositif de plaques conductrices (2) qui comporte une couche de colle à coller à l'échantillon de plante (P).

10. Appareil de détection (1) selon l'une quelconque des revendications précédentes, dans lequel la première structure de délimitation de compartiment (4A) comporte une section de butée (42) réalisée à partir d'un matière déformable de façon élastique, notamment d'une matière en silicone, à installer au niveau de l'échantillon de plante (P).

11. Appareil de détection (1) selon l'une quelconque des revendications précédentes comportant en outre :
un capteur de rayonnement (9) disposé au niveau du dispositif de plaques conductrices (2) à l'extérieur des première et deuxième sections de délimitation de compartiment (4A, 4B) pour détecter le rayonnement incident.

12. Appareil de détection (1) selon l'une quelconque des revendications précédentes, dans lequel la première et la deuxième ouverture d'aération (6A, 6B) sont respectivement recouverts par une membrane (10) perméable aux gaz.

13. Appareil de détection (1) selon l'une quelconque des revendications précédentes, dans lequel le premier capteur d'humidité (3A) et/ou le deuxième capteur d'humidité (3B) est réalisé sous la forme d'une unité de capteurs combinée conçue pour détecter l'humidité et la température.

14. Appareil de détection (1) selon l'une quelconque des revendications précédentes, comportant en outre :
un dispositif de limitation mécanique de débit (90) à l'aide duquel la surface de section transversale de la première ouverture d'aération (6A) peut varier.
